# EUROPEAN PATENT APPLICATION

(11) **EP 1 876 410 A1**
(43) Date of publication of application: **09.01.2008**
(21) Application number: 06732197.6
(22) Date of filing: 21.04.2006
(51) Int. Cl.: F42D 1/10, G01F 11/46

(54) **EXPLOSIVE LOADER AND EXPLOSIVE LOADING METHOD**

(30) Priority: 27.04.2005 JP 2005130244
(71) Applicant: NIPPON KAYAKU KABUSHIKI KAISHA, Tokyo 102-8172 (JP)
(72) Inventor: TAGUCHI, Takuya c/o Nippon Kayaku K.K. Asaplant, Sanyoonoda-shi, Yamaguchi 7578686 (JP); SASAKI, Shigeyuki c/o Nippon Kayaku K.K. Asaplant, Sanyoonoda-shi, Yamaguchi 7578686 (JP)
(74) Representative: Shindler, Nigel
(86) International application number: PCT/JP2006/308389
(87) International publication number: WO 2006/118048

(57) **Abstract**

An explosive loading machine capable of quantitatively supplying an explosive with a relatively simple structure without using a pressure container is provided. The explosive loading machine 11 is equipped with an unsealed explosive container 12 having a container body 13 containing a granular explosive with an upper part provided with an explosive charge port 14 and a lower part provided with an explosive drop port 18. To the explosive drop port 18 of the explosive container 12 is connected a measuring valve 21 measuring a fixed amount of the explosive by controlling an opening/closing time with a timer. Below the measuring valve 2 1, isconnectedanexplosive holding container 23 temporarily accommodating the explosive with the fixed amount supplied via the measuring valve 21 and supplying the explosive to an explosive loading target through a loading hose 22 . A compressed air feeding device 24 supplying compressedair to the interior of the explosive holding container 23 is provided.

## Description

### TECHNICAL FIELD

This invention relates to an explosive loading machine and method suitably usable for loading an industrial explosive employed for an industrial blasting operation such as tunnel excavation, quarrying and mining.

### BACKGROUND ART

Mechanization of an explosive loading operation has been demanded at blasting sites such as tunnel excavation, quarrying and mining from the perspective of facilitation of explosive loading operation and ensuring of safety in handling an explosive. An explosive to be used requires greater safety in order to operate mechanical loading of the explosive. A method for mechanically loading an ammonium nitrate fuel oil explosive, or ANFO explosive, by a loader has been put into practical use in mines and quarries.

One of the explosive loading machines in common use these days is an explosive loading machine with a positive-displacement measuring apparatus such as an ammonium nitrate explosive loadingmachine roughly equipped with a hopper containing an ammonium nitrate fuel oil explosive therein, a positive-displacement measuring apparatus provided in the lower part of the hopper via an inlet side opening/closing valve (a first opening/closing means), a transfer pipe provided in the lower part of the positive-displacement measuring apparatus via an outlet side opening/closing valve (a second opening/closing means) and piping equipment for supplying compressed air (pressurized gas) into the hopper. In the positive-displacement measuring apparatus, there is provided a volume variable means to adjust an internal volume (See Patent Document 1, for example).

In addition, there is an explosive loading machine realizing safe loading operation where clogging in a passage and idling are detected by installing an electromagnetic flow sensor, a temperature sensor and a liquid level sensor in a loading device for a bulk water gel explosive or its intermediate product (See Patent Document 2, for example).

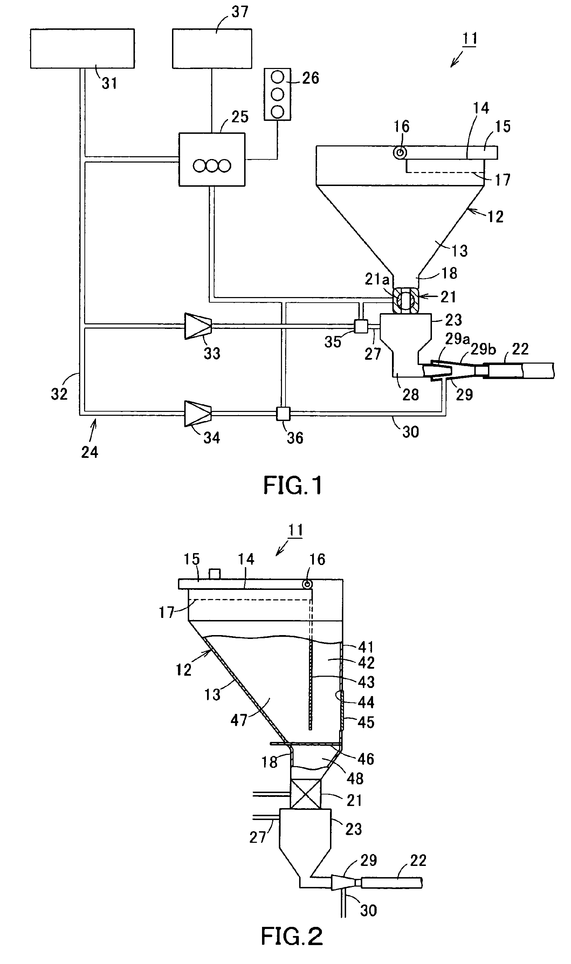

There is also an explosive loading system for the hopper-type explosive loading machine as described above wherein an explosive is put into a pressure container and then supplied by pressurizing the inside of the container (See Patent Documents 3 and 4, for example).
Patent Document 1: Japanese Laid-Open Patent Publication No. 2000-97600 (Page 5, FIG. 4)
Patent Document 2: Japanese Laid-Open Patent Publication No. 2003-28600 (Page 4, FIG. 1)
Patent Document 3: Japanese Translation of International Application (Kohyo) No. 2000-513429 (Page 7, FIG. 1)
Patent Document 4: Japanese Laid-Open Patent Publication No. 2004-333080 (Page 3)

### DISCLOSURE OF THE INVENTION

### Problems to be Solved by the Invention

The explosive loadingmachine as described in Patent Document 1 has a problem that the configuration of the positive-displacement measuring apparatus having the volume variable means for adjusting the internal volume becomes complicated.

The explosive loading machine as described in Patent Document 2 has a problem that failures and malfunctions of the electromagnetic flow sensor, temperature sensor and liquid level sensor cannot be dealt with although clogging in the passage and idling can be automatically detected by the sensors.

The explosive loading system as described in Patent Document 3 or 4 is superior in maintainability since the machine itself is very simple. However, it employs a pressure container and thus it is necessary to release the pressure of the container in order to add an explosive when explosives run short during loading. Consequently, the addition of the explosive is not easy. It can be assumed that blasting operations will become efficient by loading several kinds of explosives with different powers simultaneously according to loading sites. However, in the case of the loading machine employing the pressure container, only one kind of explosive can be loaded even if a plurality of loading hoses are connected to one pressure container. Furthermore, since the inside of the container is pressurized in the case of the pressure container, there is a problem that an explosive is subject to bridges in the tank depending on the type of the explosive.

Therefore, an explosive loading machine and method capable of quantitatively supplying an explosive and also supplying several kinds of explosives simultaneously with a relatively simple mechanical structure without using a pressure container has been demanded.

In addition, since a container containing an explosive is generally made of a material such as stainless steel, conditions within the container cannot be checked visually. When a bridge is caused, it is necessary to hammer a proper place in the container with a wooden hammer, etc., until the bridge is removed. A shape of the explosive container is designed in consideration of a repose angle of an explosive to be used, and is generally an inversed cone with an angle of approximately 30 degrees. There is a problem that a bridge of an explosive is inclined to occur within the container depending on the type of the explosive since loads of the explosive are often imposed around the lower part of the container. In particular, another problem is caused that an explosive cannot be discharged properly when used in a damp place such as a tunnel since the explosive absorbs moisture and clumps in front of a valve to which the explosive is discharged from the explosive container. If the explosive is extraordinary clumped, work to disassemble piping around the measuring valve and remove the clumped explosive is required.

As a result, an explosive loading machine which has a structure capable of checking where the bridge is caused and also of removing the bridge easily by inserting a rod-like tool directly into the container when a bridge is caused within the explosive container due to moisture absorption has been demanded.

The present invention was made in view of such circumstances, and accordingly it is an object of the invention to provide an explosive loading machine capable of quantitatively supplying an explosive with a relatively simple structure without using a pressure container. Another object is to provide an explosive loading machine capable of removing a bridge caused within a container containing an explosive in a short time so as to improve explosive loading operating efficiency. Still another object is to provide an explosive loading machine capable of supplying several kinds of explosives simultaneously employing these loading machines. Still another object is to provide an explosive loading method with use of these loading machines.

### Means for Solving the Problems

An invention as set forth in claim 1 is an explosive loading machine equipped with an unsealed explosive container having a container body containing an explosive with an upper part provided with an explosive charge port and a lower part provided with an explosive dropport, a measuring valve connected to the explosive drop port of the unsealed explosive container and measuring a fixed amount of the explosive by controlling an opening/closing time with a timer, an explosive holding container temporarily accommodating the explosive with the fixed amount supplied via the measuring valve and supplying the explosive to an explosive loading target through a loading hose, and a compressed air feeding device supplying compressed air into the explosive holding container.

An invention as set forth in claim 2 is the explosive loading machine according to claim 1 wherein the unsealed explosive container is further equipped with a partition plate provided toward the explosive drop port and forming a space section where the explosive does not enter, and an observation window capable of viewing the interior of the explosive drop port via the space section formed by the partition plate.

An invention as set forth in claim 3 is the explosive loading machine according to claim 2 being further equipped with a see-through plate openably and closably provided in the observation window.

An invention as set forth in claim 4 is the explosive loading machine according to claim 2 or 3 being further equipped with an opening/closing plate provided openably and closably between the unsealed explosive container and measuring valve.

An invention as set forth in claim 5 is the explosive loading machine wherein a plurality of the explosive loading machines according to any one of claims 1 to 4 are installed together.

An invention as set forth in claim 6 is the explosive loading machine according to any one of claims 1 to 5 wherein the explosive has a granular shape.

An invention as set forth in claim 7 is the explosive loading machine according to claim 6 wherein the granular explosive is equipped with a water-in-oil emulsion explosive molded into 0.03 to 5 g at an average weight per grain.

An invention as set forth in claim 8 is the explosive loading machine according to claim 6 wherein the granular explosive is equipped with an ammonium nitrate fuel oil explosive.

An invention as set forth in claim 9 is an explosive loading method for loading an explosive to a blasting hole with use of the explosive loading machine according to any one of claims 1 to 8.

### Effects of the Invention

According to the invention as set forth in claim 1, the measuring valve measuring a fixed amount of an explosive by controlling an opening/closing time with a timer is capable of preventing excess and deficiency of a loading amount in spite of its simple structure. In addition, the unsealed explosive container which is not a pressure container and into which an explosive can be easily refilled and the explosive holding container into which compressed air is supplied by the compressed air feeding device are separated via the measuring valve. As a result, a loading time can be reduced and operating efficiency can be improved. In other words, the measuring valve measuring a fixed amount of an explosive by controlling an opening/closing time with a timer is connected to the explosive drop port of the unsealed explosive container containing the explosive. The explosive with the fixed amount supplied via the measuring valve is temporarily accommodated in the explosive holding container. The explosive in the explosive holding container is supplied to the explosive loading target through the loading hose with the use of compressed air supplied from the compressed air feeding device into the explosive holding container. Consequently, an explosive loading machine capable of efficiently supplying an explosive quantitatively with a relatively simple structure can be provided without using the pressure container.

According to the invention as set forth in claim 2, when a bridge is caused in or in the vicinity of the explosive drop port within the unsealed explosive container containing an explosive due to moisture absorption by the explosive, the fact that the bridge is caused and a place where it is caused can be easily checked from the outside with use of the partition plate and observation window provided in the unsealed explosive container. Accordingly, an action for removing the bridge can be taken promptly, for example, by applying vibrations to the unsealed explosive container, so that an explosive loading machine capable of improving explosive loading operating efficiency can be provided.

According to the invention as set forth in claim 3, the see-through plate is openably and closably provided in the observation window. When a bridge is caused in the unsealed explosive container containing an explosive, the bridge can be easily removed by opening the see-through plate and using a tool inserted directly into the container via the observation window, thereby improving explosive loading operating efficiency.

According to the invention as set forth in claim 4, the opening/closing plate is openably and closably provided between the unsealed explosive container and the measuring valve. If the opening/closing plate is closed after the loading operation and the explosive remaining between the plate and the measuring valve is discharged, whether the explosive is clumped into a bridged condition on the opening/closing plate can be checked easily from the observation window when the opening/closing plate is opened before the subsequent loading operation.

According to the invention as set forth in claim 5, different kinds of explosives can be supplied simultaneously by a plurality of explosive loading machines arranged together. Different kinds of granular explosives can be loaded quantitatively at a blasting site, considering circumstances at the site.

According to the invention as set forth in claim 6, the granular explosive can be efficiently loaded quantitatively to the explosive loading target with a relatively simple structure even without using a pressure container.

According to the invention as set forth in claim 7, a granular water-in-oil emulsion explosive molded into 0. 03 to 5 g at an average weight per grain can be efficiently loaded quantitatively to the explosive loading target with a relatively simple structure even without using a pressure container.

According to the invention as set forth in claim 8, a granular ammonium nitrate fuel oil explosive can be efficiently loaded quantitatively to the explosive loading target with a relatively simple structure even without using a pressure container.

According to the invention as set forth in claim 9, an explosive loading method where an explosive can be efficiently loaded quantitatively to the explosive loading target even without using a pressure container can be provided.

### BRIEF DESCRIPTION OF THE DRAWINGS

FIG. 1 is a schematic view of a first embodiment of an explosive loading machine in accordance with the present invention.
FIG. 2 is a partially broken side view of an explosive container in a second embodiment of the explosive loading machine.
FIG. 3 is a front elevational view of the second embodiment of the explosive loading machine.
FIG. 4 is a partially broken side view of an explosive container in a third embodiment of the explosive loading machine.
FIG. 5 is a plain view of a fourth embodiment of the explosive loading machine.
FIG. 6 is a front elevational view of the fourth embodiment of the explosive loading machine.

### REFERENCE NUMERALS

- 11, 11a, 11b and 11c:: Explosive loading machine
- 12:: Explosive container as unsealed explosive container
- 13:: Container body
- 14:: Explosive charge port
- 18:: Explosive drop port
- 21:: Measuring valve
- 22:: Loading hose
- 23:: Explosive holding container
- 24:: Compressed air feeding device
- 42:: Space section
- 43:: Partition plate
- 44:: Observation window
- 45:: See-through plate
- 46:: Damper as opening/closing plate

### BEST MODE FOR CARRYING OUT THE INVENTION

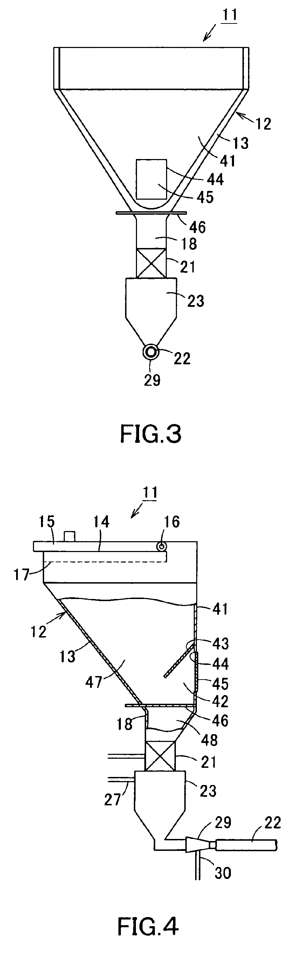

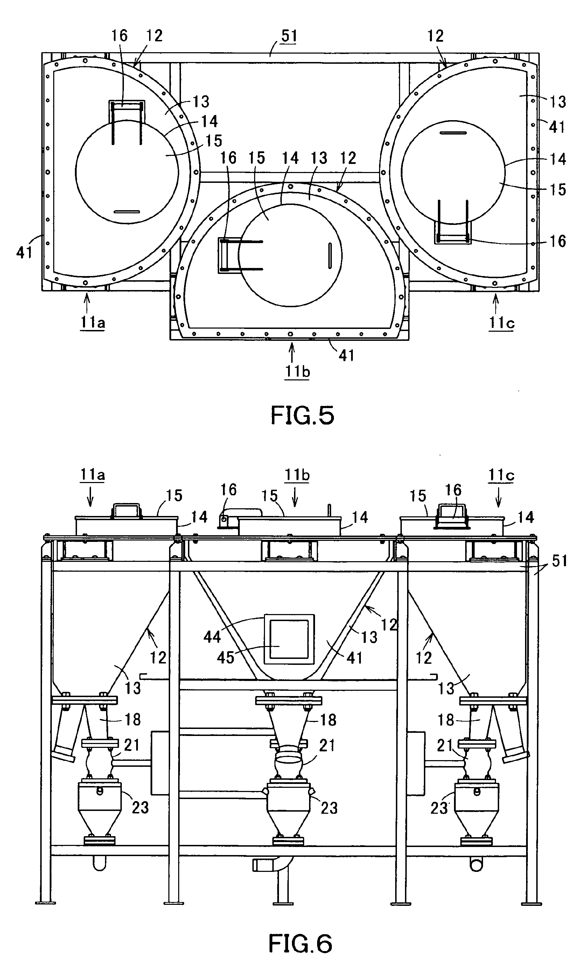

The present invention will be described in detail with reference to a first embodiment shown in FIG. 1, a second embodiment shown in FIGS. 2 and 3, a third embodiment shown in FIG . 4 and a fourth embodiment shown in FIGS. 5 and 6. However, it is a matter of course that the present invention is not restricted to these embodiments.

First, a first embodiment shown FIG. 1 is described.

An explosive loading machine 11 shown in FIG. 1 has an unsealed explosive container which is not a pressure container (hereinafter, referred to as an explosive container 12) . The explosive container 12 is equipped with a container body 13 containing an explosive with an upper part provided with an explosive charge port 14 to which a cover 15 is openably and closablyattachedbyahinge 16. In the interior of the explosive charge port 14 is provided a wire mesh 17 for preventing contamination of foreign matter. The container body 13 also has a lower part provided with an explosive drop port 18.

To the explosive drop port 18 of the explosive container 12 is connected a measuring valve 21 measuring a fixed amount of an explosive by controlling an opening/closing time with a timer setting by the second. To a lower part of the measuring valve 21 is connected an explosive holding container 23 temporarily accommodating the explosive with the fixed amount supplied via the measuring valve 21 and supplying the explosive to a blasting hole as an explosive loading target through a loading hose 22. A compressed air feeding device 24 supplying compressed air to the inside of the explosive holding container 23 is installed.

The explosive container 12 may be in any shape if it is not a pressure container. The container 12 shown is a simple hopper type in the shape of an inversed cone. A capacity of the explosive container 12 is determined based on an amount of the explosive to be used. One explosive container 12 is designed to have a capacity of 50 to 100 kg, for example.

The measuring valve 21 is arranged at the lower part of the explosive container 12 and quantitatively supplies the explosive within the explosive container 12 to the explosive holding container 23 by controlling an opening/closing second with a timer. The measuring valve 21 may be in any form if it is able to supply a granular explosive quantitatively and stably. The measuring valve 21 is located between the explosive container 12 and the explosive holding container 23. The granular explosive within the explosive container 12 passes through the measuring valve 21 by free fall and is accommodated in the explosive holding container 23.

Types of the measuring valve 21 include a ball valve opening and closing a passage by turning a ball 21a provided with a through hole in the diametrical direction of the sphere, or a gate valve blocking off the passage by a gate.

A control panel 25 controlling the measuring valve 21 houses a timer (not shown). A solenoid air valve provided in pneumatic piping is controlled by setting up the timer by the second, thereby controlling an opening/closing time of the measuring valve 21 whose opening and closing are driven by an air actuator (not shown) such as an air motor and an air cylinder. An amount of the explosive to be supplied can be adjusted by changing the timer setting by the second, allowing a detailed setting of the amount to be supplied as well. The measuring valve 21 may be driven by an electric motor controlled by a timer.

A piping diameter of the measuring valve 21 is preferably 30 to 100 mm, for example. When an explosive with poor liquidity is used, it is preferred to select a piping diameter of 60 to 90 mm. As the piping diameter becomes large, accuracy of the amount supplied tends to be reduced. As the piping diameter becomes small, clogging in the piping is caused. Therefore, the piping diameter of the measuring valve 21 is to be determined in view of the problems above.

A plurality of timers are provided on the control panel 25, each of which has a different amount of the explosive to be supplied set. The timers are configured so as to be selected by an operating switch 26 connected to the control panel 25 such that an optimum amount of the explosive to be supplied can be easily selected and loaded with a button operation of the operating switch 26.

The explosive holding container 23 is supplied with compressed air by a compressed air feeding pipe 27 connected to the upper part thereof. The compressed air makes the explosive in the container 23 be loaded to a blasting hole via a loading hose 22 connected to an explosive delivery port 28 provided at the lower part of the container 23. The explosive holding container 23 may be in any form and is located at the lower part of the measuring valve 21 controlled by the timer and temporarily accommodates the granular explosive passing through the measuring valve 21. A capacity of the explosive holding container 23 is preferably 2 to 6 kg although depending on a scale of blasting.

The loading hose 22 can be changed according to a diameter of a blasting hole in a blasting site. A hose with an inner diameter of 15 to 40 mm is generally used in a tunnel site. Although it differs depending on the blasting site, the loading hose 22 with an outer diameter of preferably 35 mm or less, and more preferably 30 mm or less is used. An entire length of the loading hose 22 is sufficiently usable at an actual site if it is generally 30 to 50 m. When an outer diameter of a part in the loading hose 22 which is inserted into a blasting hole is smaller than that of the blasting hole, a hose with a larger diameter can be used other than the part such that a hose with two or more kinds of inner diameters can be connected. It is also possible to connect a cylindrical component with the length of 1 to 3 m to a distal end of the loading hose 22.

In order to prevent a problem that an explosive is clogged in the loading hose 22 when supply increases, a double pipe 29 with an inner pipe 29a and an outer pipe 29b is provided in the explosive delivery port 28 of the explosive holding container 23 into which the loading hose 22 is connected. While the explosive from the explosive holding container 23 is delivered inside of the inner pipe 29a, compressed air is delivered into the double pipe 29 via a space between the inner and outer pipes 29a and 29b from compressed air feeding piping 30 connected to the outer pipe 29b. The explosive can be pressure-fed by the compressed air.

A compressed air feeding device 24 is equipped with a pneumatic source 31 as a source of compressed air such as a compressor, and pneumatic piping 32 connected to the pneumatic source 31. The pneumatic piping 32 is provided with a first anda secondpressure reducing valves 33, 34 adjusting a pressure of the compressed air supplied from the pneumatic source 31, and a first and a second air blow valves 35, 36 supplying and stopping the compressed air by respective opening/closing operation, the compressed air being pressure-regulated by the pressure reducing valves 33, 34.

The first air blow valve 35 is connected to the upper part of the explosive holding container 23 via compressed air feedingpiping27, while the secondairblowvalve 36 is connected to the double pipe 29 via the compressed air feeding piping 30. Although the discharge air flow rate supplied by the pneumatic source 31 depends on the number of the explosive containers 12, it is preferably 3.5 m³ per minute or more, and more preferably 5 m³ per minute or more.

Although the pressure of compressed air supplied to the loading hose 22 and explosive holding container 23 varies since supplying conditions depend on a diameter of a hose to be used, the pressure is set up in the range of 0. 1 to 0.5 MPa, and preferably 0.2 to 0.4 MPa by the pressure reducing valves 33 , 34 . Specificgravityof an explosive tobe loaded is adjusted by changing the pressure of the compressed air, allowing for controlling power.

Opening/closing of the measuring valve 21 and the air blow valves 35, 36 of the compressed air feeding device 24 is controlled by an air operating pressure supplied by the control panel 25. The control panel 25 houses a timer and a solenoid air valve actuated by the timer. An air operating pressure output by the solenoid air valve controls the opening/closing of the measuring valve 21 and air blow valves 35, 36. An operating switch 26 for selecting a setting of the timer and an electric power supply 37 driving the timer and solenoid air valve are connected to the control panel 25.

A granular explosive can be loaded in the explosive loading machine 11. An explosive assuming a granular shape such as an ammonium nitrate fuel oil explosive, or ANFO explosive, and a water-in-oil emulsion explosive molded into a grain can be used, for example. Of ANFO explosives, a regular ANFO explosive obtained by mixing and stirring porous prill ammonium nitrate and a fuel oil such as a light oil can be used.

A granular water-in-oil emulsion explosive is manufactured as follows, for example. An oxidizing agent such as ammonium nitrate is dissolved in water at about 85 to 95°C so as to obtain a water solution of the oxidizing agent. Subsequently, the water solution of the oxidizing agent is gradually added, while being stirred well, to a mixture of an oil such as microcrystalline wax heated at about 85 to 95°C, an emulsifying agent such as sorbitan fatty acid ester and, if necessary, a resin such as ethylene-vinyl acetate copolymer. A micro-hollow sphere such as a glass micro balloon and, if necessary, other additives are added to the obtained water-in-oil emulsion, mixed by a kneader so as to obtain a water-in-oilemulsion explosive. Next, the obtained explosive is molded by an extrusion molding machine. The explosive may be in any shape if a grain is easy to handle, and is not restricted in particular. The explosive is molded into a given shape in accordance with a molder used for molding. The granular explosive is molded preferably in the range of 0.03 to 5 g at an average weight per grain. Although the size of the explosive depends on its shape, it is preferably 3 to 10 mm in diameter and 3 to 15 mm in length if the explosive is columnar. An adhesion inhibitor such as talc may be coated on the molded explosive.

An example of operation of each part in loading an explosive with use of the explosive loading machine 11 shown in FIG. 1 will be described.

The cover 15 attached to the explosive charge port 14 of the explosive container 12 is opened so as to fit the wire mesh 17 for preventing contamination of foreign matter. A granular explosive is charged from the explosive charge port 14 into the explosive container 12 through the wire mesh 17. A time for opening the measuring valve 21 relative to a given supply of the explosive is set by the timer in the control panel 25. The set time by the timer for opening the measuring valve 21 can be selected arbitrarily by the operating switch 26 connected to the control panel 25.

When the timer in the control panel 25 selected by the operating switch 26 outputs an on-signal, the solenoid air valve in the control panel 25 is opened. An air operating pressure supplied by the solenoid air valve actuates the air actuator of the measuring valve 21 such that the measuring valve 21 is opened for a setting time, whereby the granular explosive within the explosive container 12 with an amount equivalent to the setting time is quantitatively supplied into the explosive holding container 23 by self-weight.

As soon as the measuring valve 21 is closed after the setting time by the timer, the first air blow valve 35 connected to the upper part of the explosive holding container 23 is opened such that compressed air pressure-regulated by the first pressure reducing valve 33 is delivered to the explosive holding container 23. Then the compressed air delivers the granular explosive within the explosive holding container 23 to the loading hose 22 via the double pipe 29, thereafter the explosive is loaded into the blasting hole through the loading hose 22. At this moment, the second air blow valve 36 is opened simultaneously, and compressed air pressure-regulated by the second pressure reducing valve 34 is supplied directly to the inside of the loading hose 22 from the double pipe 29, so that a possibility that the explosive is clogged in the loading hose 22 can be prevented.

The first and second air blow valves 35, 36 are suitably configured to be closed after the granular explosive within the loading hose 22 is completely discharged by the compressed air.

As described above, the explosive loading method for loading the granular explosive to the blasting hole by using the explosive loading machine 11 shown in FIG. 1 is carried out. The measuring valve 21 measuring a fixed amount of the explosive by controlling an opening/closing time with the timer is capable of preventing excess and deficiency of the amount of the explosive loaded in spite of its simple structure. Furthermore, the measuring valve 21 separates the unsealed explosive container 12 which is not a pressure container and into which the explosive can be easily refilled, from the explosive holding container 23 supplied with compressed air from the compressed air feeding device 24, thereby enabling to reduce a loading time and improve operating efficiency.

In other words, to the explosive drop port 18 of the unsealed explosive container 12 containing the explosive is connected the measuring valve 21 measuring a fixed amount of the explosive by controlling an opening/closing time with a timer. While the explosive with the fixed amount supplied via the measuring valve 21 is temporarily accommodated in the explosive holding container 23, the compressed air supplied from the compressed air feeding device 24 into the explosive holding container 23 delivers the explosive in the explosive holding container 23 to the blasting hole through the loading hose 22. Consequently, the explosive loading machine 11 capable of efficiently supplying the explosive quantitatively with a relatively simple structure without using a pressure container can be provided.

Next, a second embodiment shown in FIGS. 2 and 3 is described. The same symbols are given to similar parts to the first embodiment shown in FIG. 1, and their explanations are simplified.

An explosive loading machine 11 shown in FIGS. 2 and 3 is equipped with an unsealed explosive container (hereinafter, referred to as an explosive container 12) having a container body 13 containing a granular explosive with an upper part provided with an explosive charge port 14 and a lower part provided with an explosive drop port 18, a measuring valve 21 connected to the explosive drop port 18 of the explosive container 12 and measuring a fixed amount of the explosive by controlling an opening/closing time with a timer, an explosive holding container 23 temporarily accommodating the explosive with the fixed amount supplied through the measuring valve 21 and supplying the explosive to a blasting hole as an explosive loading target through a loading hose 22 and a compressed air feeding device (not shown since it is the same as in FIG. 1) supplying compressed air to the inside of the explosive holding container 23.

The explosive container 12 which is not a pressure container is provided with a flat side surface 41 at one side of the container body 13 in the shape of an inversed cone. Inside of the explosive container 12, a partition plate 43 forming a space section 42 where the explosive cannot enter at the opposite side of the explosive charge port 14 is provided parallel with the flat side surface 41 with respect to the explosive drop port 18. An observation window 44 capable of viewing the interior of the container and in particular the interior of the explosive drop port 18 through the space section 42 formed on the flat side surface 41 side by the partition plate 43 is provided on the flat side surface 41 of the container body 13. A see-through plate 45 such as a glass plate or synthetic resin plate is openably and closably provided in the observation window 44 along a slide guide (not shown) or by a hinge (not shown) as a supporting point. In addition, a damper 46 as an inserting opening/closing plate, for example, is openably and closably provided between the explosive container 12 and measuring valve 21.

As described above, the interior of the explosive container 12 is divided by the partition plate 43 provided vertically into an explosive containing section 47 on the left of FIG. 2 where the explosive is charged and the space section 42 on the right of FIG. 2 where the explosive cannot enter. The observation window 44 and see-through plate 45 capable of viewing the interior of the explosive container 12, and in particular the interior of the explosive drop port 18 are provided on the flat side surface 41 located on the space section 42 side of the explosive container 12. The see-through plate 45 of the observation window 44 is configured to have an openable and closable structure. A size of the observation window 44 is designed in order that a rod-like tool for removing a bridge can be inserted thereinto when necessary.

The damper 46 is inserted between the explosive container 12 and measuring valve 21, and is configured to have a space 48 of 300 ml or more, and more preferably 500 ml or more between the explosive container 12 and measuring valve 21 when the damper 46 is closed. The damper 46 is one which can be opened and closed manually or mechanically.

Closing the damper 46 after finishing loading operation and discharging the explosive remaining between the measuring valve 21 and damper 46 produces the space 48 above the measuring valve 21, thereby rendering the explosive present only above the damper 46. Even if the explosive is clumped due to moisture absorption, whether the explosive is clumped can be checked from the attached observation window 44 when the damper 46 is opened before loading operation. Even a bridge resulting from the clumped explosive because of moisture absorption would be promptly removable through the observation window 44.

The explosive loading machine 11 is capable of loading a granular explosive. An explosive assuming a granular shape such as an ammonium nitrate fuel oil explosive, or ANFO explosive, and a water-in-oil emulsion explosive molded into a granular shape can be used, for example. Since it has been already explained, the manufacturing method and average weight per grain of the explosives are omitted.

Next, operation and effect of the second embodiment shown in FIGS. 2 and 3 are described.

The cover 15 of the explosive container 12 is opened, charging the explosive from the explosive charge port into only the explosive containing section 47 formed on the left of the partition plate 43 as shown in FIG. 2 through the wire mesh 17 for preventing contamination of foreign matter. The explosive does not enter the space section 42 shown on the right of the partition plate 43. The interior of the explosive container 12, and in particular the explosive drop port 18 can be observed from the observation window 44 through the space section 42. As a result, when a bridge where the granular explosive is clumped and does not fall by self-weight is caused in a place above the measuring valve 21, its conditions and place can be checked easily from the outside through the observation window 44 so that an action for removing the bridge can be taken.

A way of removing the bridge of the explosive is to applyvibrations by lightlyhammering the explosive container 12 with a wooden hammer, etc., or to insert a rod-like tool from the observation window 44 after being opened, thereby removing the bridge promptly.

Furthermore, as a countermeasure for the bridge, the damper 46 is closed after the end of loading operation, forcing the explosive present between the damper 46 and measuring valve 21 to be discharged. When the damper 46 is opened before the subsequent loading operation, whether the explosive is clumped into a bridge above the damper 46 can be easily checked from the observation window 44.

As described above, even if a bridge is caused due to moisture absorption in or in the vicinity of the explosive drop port 18 of the explosive container 12 containing an explosive in the explosive loading machine 11 for mechanical loading used at a blasting site, the fact that the bridge is caused and the place where the bridge is caused can be easily checked from the outside with use of the partition plate 43 and observation window 44 provided in the explosive container 12 . Accordingly, an action for removing the bridge can be taken promptly, for example, by applying vibrations to the explosive container 12, thereby enabling to provide the explosive loading machine 11 with the capability of improving explosive loading operating efficiency. Furthermore, since the see-through plate 45 of the observation window 44 is provided openably and closably, when a bridge of the explosive is caused within the explosive container 12 containing the explosive the see-through plate 45 is opened so as to remove the bridge easily by using a rod-like tool directly inserted from the observation window 44 into the explosive container 12, thereby enabling to improve efficiency of explosive loading operation.

Operation of each part in carrying out an explosive loading method for loading a granular explosive to a blasting hole with use of the explosive loading machine 11 shown in FIGS. 2 and 3 is similar to one shown in FIG. 1. That is, passing from the explosive drop port 18 of the explosive container 12 containing an explosive through the measuring valve 21 measuring a fixed amount of the explosive by controlling an opening/ closing time with a timer, the explosive with the fixed amount is temporarily accommodated in the explosive holding container 23. Compressed air supplied from the compressed air feeding device 24 into the explosive holding container 23 delivers the explosive in the explosive holding container 23 to the explosive loading target through the loading hose 22.

Therefore, the measuring valve 21 measuring a fixed amount of the explosive by controlling an opening/closing time with a timer is capable of preventing excess and deficiency of amount to be loaded in spite of its simple structure. Furthermore, the measuring valve 21 separates the unsealed explosive container 12 which is not a pressure container and into which the explosive can be easily refilled, from the explosive holding container 23 supplied with compressed air from the compressed air feeding device 24, thereby enabling to reduce a loading time and improve operating efficiency.

FIG. 4 illustrates a third embodiment showing a variation of the partition plate 43. The partition plate 43 is not necessarily provided vertically from the upper part of the container body 13 as shown in FIG. 2. As long as the explosive can fall by free fall, the partition plate 43 may be arranged to protrude obliquely downward from the flat side surface 41 above the observation window 44 as shown in FIG. 4 so as to form the space section 42 between the partition plate 43 and the see-throughplate 45 of the observation window 44. In short, it is sufficient if the interior of the explosive drop port 18 can be viewed from the see-through plate 45 of the observation window 44 through the space section 42 formed by the partition plate 43. Besides, the same symbols are given to similar parts to the embodiment shown in FIG. 2, and their explanations are omitted.

Next, a fourth embodiment shown in FIGS. 5 and 6 is described.

In the fourth embodiment, a plurality of units of the explosive loading machine 11 shown in FIGS. 2 and 3 or the explosive loading machine 11 shown in FIG. 4 are installed together. Three units of explosive loading machines 11a, 11b and 11c are mounted back to back on a frame structure 51. Since each of the explosive loading machines 11a, 11b and 11c is the same as the explosive loading machine 11 shown in FIGS. 2 and 3 or the explosive loading machine 11 shown in FIG. 4, the same symbols are given to the corresponding parts and their explanations are omitted.

The explosive loading machines 11a, 11b and 11c, are arranged to have each of explosive containers 12 installed on the frame structure 51 such that flat side surfaces 41 of container bodies 13 in explosive containers 12 are turned outside and back surfaces of inversed cones are back to back to one another. Then, the three units of the explosive loading machines 11a, 11b and 11c are allowed for compact installation.

Each of the explosive loading machines 11a, 11b and 11c implements an explosive loadingmethod for loading a granular explosive to a blasting hole, similar to the explosive loading machine 11 shown in FIGS. 2 and 3 or the explosive loading machine 11 shown in FIG. 4. That is, passing from the explosive drop port 18 of the explosive container 12 containing an explosive through the measuring valve 21 measuring a fixed amount of the explosive by controlling an opening/closing time with a timer, the explosive with the fixed amount is temporarily accommodated in the explosive holding container 23. Compressed air supplied from the compressed air feeding device 24 into the explosive holding container 23 delivers the explosive in the explosive holding container 23 to a blasting hole through the loading hose 22.

As described above, the measuring valve 21 measuring a fixed amount of the explosive by controlling an opening/closing time with a timer is capable of preventing excess and deficiency of the amount to be loaded in spite of its simple structure. Furthermore, the measuring valve 21 separates the explosive container 12 which is not a pressure container and into which the explosive can be easily refilled, from the explosive holding container 23 supplied with compressed air from the compressed air feeding device 24, thereby reducing a loading time and improving operating efficiency.

Different kinds of explosives are contained into the explosive containers 12 of thepluralityof explosive loading machines 11a, 11b and 11c, supplying 2 or more different kinds of explosives to one blasting hole simultaneously from the plurality of the loading machines 11a, 11b and 11c. By this means, different kinds of granular explosives can be loaded quantitatively at a blasting site, considering circumstances at the site, and accordingly reduction in a loading time and improvement in operating efficiency are achieved.

### Examples

A performance test of the explosive loading machine 11 shown in FIG. 1 was conducted, which is described below.

### (Example 1)

An ANFO explosive was put into the explosive loading machine 11 (with a loading hose 22 of 25 mm in inner diameter, 30 mm in outer diameter and 30 m in length) shown in FIG. 1. It was observed that an amount of the explosive per actual blasting hole (0.4 to 3.0 kg) could be supplied quantitatively by controlling, with a timer, an opening/closing time of the measuring valve 21 connected to the lower part of the explosive container 12.

### (Example 2)

A water-in-oil emulsion explosive molded into 4 mm in diameter and 4 mm in length (an average weight per grain: 0.5 g) was put into the explosive loading machine 11 (with a loading hose 22 of 32 mm in inner diameter and 25 m in length, and 25 mm in inner diameter and 5 m in length) shown in FIG. 1. It was observed that an amount of the explosive per actual blasting hole (0.4 to 3.0 kg) could be supplied quantitatively by controlling, with a timer, an opening/closing time of the measuring valve 21 connected to the lower part of the explosive container 12.

### (Comparative Example 1)

An ANFO loading machine (product name: KY-1 of Kayatech Co., Ltd.) with a pressure in a pressure container set at 0.2 MPa, a pressure of compressed air set at 0.2 MPa, a loading hose set to have 25 mm in inner diameter, 30 mm in outer diameter and 30 m in length was used for anANFO explosive. It was observed that an amount of the explosive per actual blasting hole (0.4 to 3.0 kg) could be supplied quantitatively by controlling a supply time based on a calibration curve calibrated beforehand. As a result, it was found that although stable supplywas possible, releasing the compressed air in the pressure container once for addition of the explosive took a lot of trouble and several kinds of explosives could not be loaded simultaneously.

### (Comparative Example 2)

An ANFO loading machine (product name: KY-1 of Kayatech Co., Ltd.) with a pressure in a pressure container set at 0.3 MPa, a pressure of compressed air set at 0.3 MPa, a loading hose set to have 25 mm in inner diameter, 30 mm in outer diameter and 30 m in length was used for a water-in-oil emulsion explosive molded into 4 mm in diameter and 4 mm in length. It was observed that an amount of the explosive per actual blasting hole (0.4 to 3.0 kg) could be supplied quantitatively by controlling a supply time based on a calibration curve calibrated beforehand. As a result, the explosive was brought into a bridge within the pressure container and thus unable to be supplied stably.

Next, explosive amounts supplied which were obtained in Examples 1 and 2 and Comparative Example 1 (actually measured twice for each) are shown in Table 1 below.

[Table 1]

| Setting Value (kg) | Explosive Amount Supplied {Actually Measured Value (kg)} | | |
|---|---|---|---|
| | Example 1 | Example 2 | Comparative Example 1 |
| 0.4 | 0.42 | 0.41 | 0.45 |
| | 0.40 | 0.41 | 0.43 |
| 1.0 | 1.08 | 1.06 | 1.10 |
| | 1.05 | 1.04 | 1.09 |
| 2.0 | 2.12 | 2.10 | 2.08 |
| | 2.09 | 2.07 | 2.04 |
| 3.0 | 3.02 | 3.15 | 3.12 |
| | 2.96 | 3.08 | 2.89 |

As obvious from Table 1, variations from the setting explosive amount were small similar to the conventional ANFO loading machine having a pressure container, and excess and deficiency of the explosive amount caused in mechanical loading can be prevented by controlling, with a timer, an opening/closing time of the measuring valve 21 provided on the lower part of the explosive container 12 so as to supply the explosive.

A performance test of the explosive loading machine 11 shown in FIGS. 2 and 3 was carried out, and its explanation is given next.

### (Example 3)

In the explosive loading machine 11 shown in FIGS. 2 and 3, 50 kg of a water-in-oil emulsion explosive molded into 4 mm in diameter and 4 mm in length was left in the explosive container 12 for 7 days. After having been left, a supply test of supplying 2 kg of the explosive from the explosive loading machine 11 by controlling, with a timer, an opening/closing time of the measuring valve 21 provided on the lower part of the explosive container 12 was conducted. It was visually checked through the see-through plate 45 of the observation window 44 that a bridge was caused above the measuring valve 21. It was also checked visually through the see-through plate 45 of the observation window 44 that the bridge was removed by hammering the upper part of the measuring valve 21 from the outside of the explosive container 12 with a wooden hammer. After that, loading was able to proceed immediately, following regular procedures.

### (Comparative Example 3)

In an ANFO loading machine with a pressure container (product name : KY-1 of Kayatech Co., Ltd.), 50 kg of the explosive was left in the pressure container for 7 days. The ANFO loading machine is capable of quantitatively supplying an explosive amount per actual blasting hole by controlling a supply time based on a calibration curve calibrated beforehand. After having been left for 7 days, a supply test of supplying 2 kg of the explosive from the ANFO loading machine was carried out. A predetermined amount to be supplied was not discharged, and then three attempts to discharge the explosive were made. However, the explosive was never discharged, so that it was predicted that a bridge might be caused within the pressure container. As hammering random places from the outside of the pressure container with a wooden hammer, the explosive was finally discharged after a fifth attempt and the bridge was removed.

As obvious from Example 3 and Comparative Example 3 , since a place where a bridge was caused could not be specified in the conventional ANFO loading machine, only a measure of hammering randomly with a wooden hammer from the outside of the pressure container could be taken. Accordingly, it took time to remove the bridge. In the explosive loading machine 11 of Example 3, however, where the bridge was caused could be specified visually through the see-through plate 45 of the observation window 44 when a bridge was caused within the explosive container 12. Furthermore, direct insertion of a tool for removing the bridge up to a place where the bridge was caused was also possible by opening the see-through plate 45 of the observation window 44. Accordingly, it did not take time to remove the bridge, thereby enabling to shorten interruption of loading operation and improve operating efficiency.

### INDUSTRIAL APPLICABILITY

The present invention is used for loading an industrial explosive employed in industrial blasting operation such as tunnel excavation, quarrying and mining.

## Claims

1. An explosive loading machine comprising:
an unsealed explosive container having a container body containing an explosive with an upper part provided with an explosive charge port and a lower part provided with an explosive drop port;
a measuring valve connected to the explosive drop port of the unsealed explosive container and measuring a fixed amount of the explosive by controlling an opening/closing time with a timer;
an explosive holding container temporarily accommodating the explosive with the fixed amount supplied via the measuring valve and supplying the explosive to an explosive loading target through a loading hose; and
a compressed air feeding device supplying compressed air to the inside of the explosive holding container.

2. The explosive loading machine according to claim 1, wherein the unsealed explosive container further comprises
a partition plate provided with respect to the explosive drop port and forming a space section where the explosive does not enter; and
an observation window from which an interior of the explosive drop port can be viewed through the space section formed by the partition plate.

3. The explosive loading machine according to claim 2, further comprising a see-through plate openably and closably provided in the observation window.

4. The explosive loading machine according to claim 2 or 3, further comprising an opening/closing plate provided openably and closably between the unsealed explosive container and measuring valve.

5. The explosive loading machine according to any one of claims 1 to 4, wherein a plurality of the explosive loading machines according to any one of claims 1 to 4 are installed together.

6. The explosive loading machine according to any one of claims 1 to 5, wherein the explosive has a granular shape.

7. The explosive loading machine according to claim 6, wherein the granular explosive comprises a water-in-oil emulsion explosive molded into 0. 03 to 5 g at an average weight per grain.

8. The explosive loading machine according to claim 6, wherein the granular explosive comprises an ammonium nitrate fuel oil explosive.

9. An explosive loading method for loading an explosive to a blasting hole with use of the explosive loading machine according to any one of claims 1 to 8.
